# EUROPEAN PATENT APPLICATION

(11) **EP 1 464 850 A1**
(43) Date of publication of application: **06.10.2004**
(21) Application number: 03425210.6
(22) Date of filing: 04.04.2003
(51) Int. Cl.: F16B 13/06

(54) **Screw anchor**

(71) Applicant: Contesini, Paride, 20141 Milano MI (IT)
(72) Inventor: Contesini, Paride, 20141 Milano MI (IT)
(74) Representative: Pizzoli, Antonio

(57) **Abstract**

Screw anchor comprising an expanding body (1) which is provided with an axial hole in which a threaded stem (2) screwed in a threaded hole (4) is arranged, as well as an expander (3) which is arranged in a suitable seat (8a, 8b) made in the expanding body (1), so that the relative rotation of the threaded stem (2) in the threaded hole (4) causes the axial sliding of the expander (3) in its seat and the expansion of the expanding body (1), wherein the expander (3) is a wedge comprising one or more inclined walls turned toward the external curved surfaces of the expanding body (1), which is divided by a median plane into at least two complementary portions (1a, 1b) having cavities (8a, 8b) which made up the seat in which the expander (3) slides and which have inner walls (9a, 9b) complementary to the walls of the expander (3), so that the sliding of the latter in its seat mutually moves the portions (1a, 1b) of the expanding body (1) away.

## Description

The present invention relates to a screw anchor, and in particular to a high resistance screw anchor which can be employed also for fixing heavy loads, for example in the building and railway constructions.

The known anchors generally comprise an expanding body made of rubber or plastic provided with an axial hole in which the stem of a screw can rotate, as well as an expander which is arranged in a suitable seat of the expanding body and is provided with a threaded hole in which the stem of the screw is screwed, so that by rotating this screw the expander slides axially in its seat toward the head of the screw and deforms the expanding body.

However, these known anchors with a mechanic expansion offer a relatively low resistance, since the deformation of the expanding body is not constant along the longitudinal axis of the hole in which it is inserted, so that the anchors with a chemical expansion, which are more difficult to be used, are preferred when heavy loads must be fixed.

It is therefore an object of the present invention to provide a screw anchor which is free from said disadvantages, i.e. an anchor with a mechanic expansion and a high resistance. Said object is achieved with an anchor, the main features of which are disclosed in the first claim and other features are disclosed in the subsequent claims.

Thanks to the particular structures of the expanding body and of the expander, the anchor according to the present invention does not deform but expands in an uniform manner along the longitudinal axis of the hole in which it is inserted, so as to distribute the pressure on a wider surface of the inner wall of the hole and thus to increase the resistance. The anchor according to the present invention is therefore particularly suitable in the uses wherein a high resistance is required, as in the field of the building and railway constructions. As a matter of fact, it has been verified that by means of this anchor it is possible to fix also loads weighing tens of tons, i.e. loads notably heavier than the loads fixable with the known anchors with an expansion not only mechanic but also chemical.

Further advantages and features of the screw anchor according to the present invention will be clear to those skilled in the art from the following detailed and non-limiting description of an embodiment thereof with reference to the attached drawings, wherein:
- figure 1 shows a side view of the anchor according to the present invention in the normal position;
- figure 2 shows a front view of the anchor of figure 1;
- figure 3 shows a cross-sectioned view along plane III-III of the anchor of figure 1;
- figure 4 shows a cross-sectioned view along plane IV-IV of the anchor of figure 1;
- figure 5 shows a side view of the anchor according to the present invention in the expanded position;
- figure 6 shows a front view of the anchor of figure 5;
- figure 7 shows a cross-sectioned view along plane VII-VII of the anchor of figure 5; and
- figure 8 shows a cross-sectioned view along plane VIII-VIII of the anchor of figure 5.

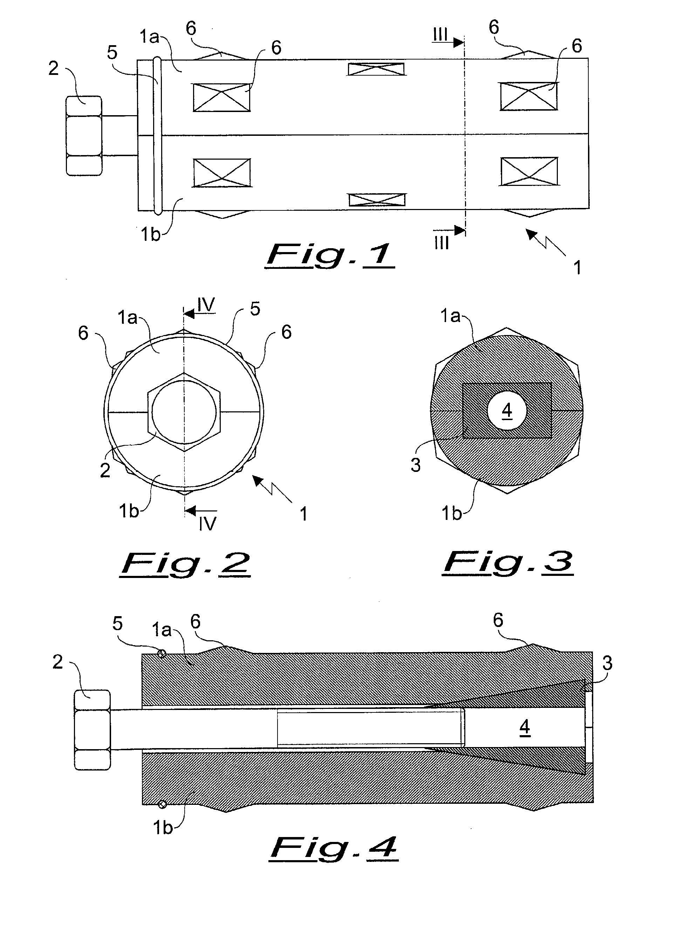

Referring to figures 1 to 4, it is seen that the anchor according to the present invention comprises in a known way an expanding body 1, with a substantially cylindrical shape, which is provided with an axial hole in which the stem of a screw 2 can rotate. An expander 3 is arranged in a suitable seat made in the expanding body 1 and is provided with a threaded hole 4 in which the stem of screw 2 is screwed, so that by rotating this screw expander 3 slides axially in its seat toward the head of screw 2 and expands the expanding body 1.

According to the invention, the expanding body 1 is suitably divided by a median plane into at least two complementary portions 1a, 1b having a substantially half-cylindrical shape. For keeping together these portions 1a, 1b before the use, the curved external surface of the expanding body 1 is preferably provided with seats in which an elastic ring 5 can be arranged. Furthermore, the external curved surfaces of portions 1a, 1b of the expanding body 1 are preferably provided with a plurality of protrusions 6, in particular pyramidal-shaped.

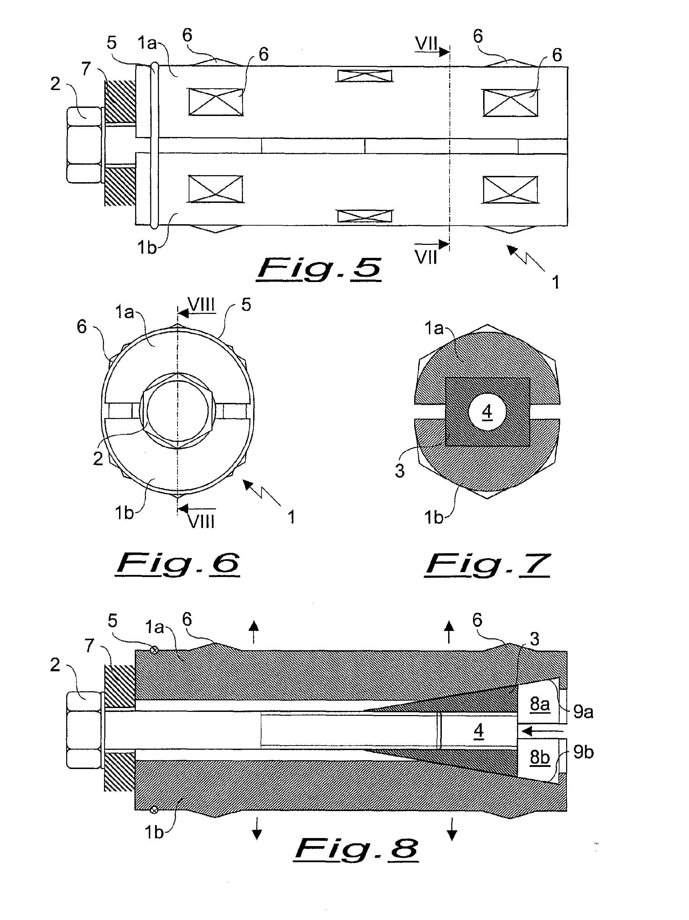

Referring now to figures 5 to 8, it is seen that during the use a member 7 to be fixed by means of the anchor according to the present invention is arranged between the head of screw 2 and the expanding body 1. Therefore, by rotating screw 2, expander 3 is pulled toward the head of screw 2, so as to slide in its seat. According to the invention, expander 3 is suitably a wedge comprising one or more inclined walls, in particular two inclined walls turned toward the external curved surfaces of the expanding body 1. The seat in which expander 3 runs comprises two cavities 8a, 8b made in portions 1a, 1b, respectively, of the expanding body 1. These cavities 8a, 8b have inner walls complementary to the walls of expander 3, in particular two inner walls 9a, 9b inclined with the same angle of the inclined walls of expander 3. With this arrangement, the sliding of expander 3 against walls 9a, 9b toward the head of screw 2 mutually moves the portions 1a, 1b of the expanding body 1 away in the direction indicated by the arrows in figure 8, in particular with a substantially translatory motion. If the expanding body 1 is inserted into a hole made in a wall, its portions 1a, 1b urge against the inner walls of this hole, so as to sturdily fix member 7. When the expanding body 1 expands, protrusions 6 penetrate into the inner walls of the hole, thereby increasing the fixing firmness.

In an alternative embodiment of the present invention, expander 3 is not provided with the threaded hole 4 but is made in a single piece with a threaded stem corresponding to the stem of screw 2. The sliding of expander 3 is therefore obtained by rotating a nut, corresponding to the head of screw 2, in the thread of the stem which protrudes outside the expanding body 1.

Each portion 1a, 1b of the expanding body 1 is preferably made up of a single solid metal piece, in particular of steel, aluminum or bronze, so as expander 3.

## Claims

1. Screw anchor comprising an expanding body (1) which is provided with an axial hole in which a threaded stem (2) screwed in a threaded hole (4) is arranged, as well as an expander (3) which is arranged in a suitable seat (8a, 8b) made in the expanding body (1), so that the relative rotation of the threaded stem (2) in the threaded hole (4) causes the axial sliding of the expander (3) in its seat and the expansion of the expanding body (1), **characterized in that** the expander (3) is a wedge comprising one or more inclined walls turned toward the external curved surfaces of the expanding body (1), which is divided by a median plane into at least two complementary portions (1a, 1b) having cavities (8a, 8b) which made up the seat in which the expander (3) slides and which have inner walls (9a, 9b) complementary to the walls of the expander (3), so that the sliding of the latter in its seat mutually moves the portions (1a, 1b) of the expanding body (1) away.

2. Anchor according to the previous claim, **characterized in that** the expander (3) comprises two inclined walls complementary to two inner walls (9a, 9b), inclined with the same angle, of the cavities (8a, 8b) in the portions (1a, 1b) of the expanding body (1).

3. Anchor according to one of the previous claims, **characterized in that** the external curved surface of the expanding body (1) is provided with seats suitable for housing an elastic ring (5).

4. Anchor according to one of the previous claims, **characterized in that** the external curved surfaces of the portions (1a, 1b) of the expanding body (1) are provided with a plurality of protrusions (6), in particular pyramidal-shaped.

5. Anchor according to one of the previous claims, **characterized in that** the portions (1a, 1b) of the expanding body (1) are made up of a single solid metal piece, in particular of steel, aluminum or bronze.

6. Anchor according to one of the previous claims, **characterized in that** the expander (3) is made up of a single solid metal piece, in particular of steel, aluminum or bronze.

7. Anchor according to one of the previous claims, **characterized in that** the threaded stem is screwed in a threaded hole (4) made in the expander (3) and belongs to a screw (2) with the head arranged outside the expanding body (1).

8. Anchor according to one of claims 1 to 6, **characterized in that** the expander (3) is carried out in a single piece with the threaded stem, in which a nut arranged outside the expanding body (1) is screwed.
